# EUROPÄISCHE PATENTSCHRIFT

(11) **EP 1 155 926 B1**
(45) Veröffentlichungstag und Bekanntmachung des Hinweises auf die Patenterteilung: **07.12.2005**
(21) Anmeldenummer: 01111922.9
(22) Anmeldetag: 18.05.2001
(51) Int. Cl.: B60R 21/16, B60R 21/20

(54) **Gassackmodul**
Air bag module
Module de sac de sécurité gonflable

(30) Priorität: 19.05.2000 DE 20008916 U; 16.06.2000 DE 20010726 U; 13.07.2000 DE 20012077 U
(43) Veröffentlichungstag der Anmeldung: 21.11.2001
(73) Patentinhaber: TRW Automotive Safety Systems GmbH, 63743 Aschaffenburg (DE)
(72) Erfinder: Frisch, Ralf, 63776 Mömbris (DE)
(74) Vertreter: Kitzhofer, Thomas

(56) Entgegenhaltungen:
- WO-A1-97/34783
- DE-A1- 4 010 767
- DE-A1- 19 749 914
- DE-A1- 19 816 080
- DE-U1- 29 921 744
- US-A- 3 945 665
- US-A- 6 042 147

## Beschreibung

Die Erfindung betrifft ein Gassackmodul, mit einem Gassack mit einer Gassackwand, die eine dem zurückzuhaltenden Insassen zugewandte Vorderwand mit einem Zentrumsabschnitt und eine Rückwand mit einer Einblasöffnung zum Anschluß eines Gasgenerators aufweist, einer Befestigung, die den Zentrumsabschnitt im vollständig aufgeblasenen Zustand des Gassacks am Modul befestigt hält und ihn beim Entfalten an einer freien Bewegung nach außen hindert, so daß der Zentrumsabschnitt eine Einbuchtung bildet, und einer Modulabdeckung, die im Rückhaltefall zum Austritt des Gassacks geöffnet wird, wobei die Modulabdeckung eine ringförmige, vorgegebene Austrittsöffnung, die die Befestigung umgibt, und einen von der Austrittsöffnung umschlossenen Halteabschnitt aufweist und an den Halteabschnitt ein von außen sichtbares, am Modul befestigtes Emblem angrenzt.

Im Bereich der tiefsten Stelle der Einbuchtung weist der Gassack gegenüber dem unmittelbar an den Zentrumsabschnitt angrenzenden Ringabschnitt eine um mindestens 40 % verringerte Tiefe auf, vorzugsweise überhaupt keine Tiefe mehr auf.

Die Erfindung betrifft insbesondere ein Fahrer- oder Beifahrer-Gassackmodul mit einem großvolumigen Gassack, der Kopf und Oberkörper bei einem Frontalaufprall schützt.

Gassäcke mit einer Einbuchtung und einer dadurch gebildeten ringförmigen Kammer zeichnen sich durch eine geringe Belastung des Insassen beim Zusammentreffen des Insassen und des Gassacks aus. Insbesondere bei einem Insassen, der sich "out of position" befindet, z.B. zu nahe am Lenkrad sitzt, kann der sich entfaltende Gassack den Insassen treffen und Belastungen auf ihn ausüben. Bei einem herkömmlichen Gassack baucht der Gassack in Richtung zum Insassen aus, so daß der Insasse durch den Gassack eine verringerte Rückhaltewirkung erfahren kann, wenn er sich "out-of-position" befindet. Ferner kann theoretisch nicht ausgeschlossen werden, daß der sich out-of-position befindliche Insasse am Gassack abrutscht.

Unter anderem folgender Nachteil soll durch die Erfindung vermieden werden: das Modul hat eine Gassackabdeckung, an der außenseitig ein schweres Emblem des Fahrzeugherstellers befestigt ist. Beim schlagartigen Aufschwenken der Modulabdeckung muß sichergestellt sein, daß das Emblem an der Abdeckung gehalten wird, was einen erhöhten Aufwand erfordert.

Die WO 97/34783 offenbart eine Airbaganordnung mit einem Airbag, der im aufgeblasenen Zustand eine Ringform aufweist. Diese wird dadurch erzielt, daß das an sich schlauchförmige Airbaggewebe an seinen beiden Enden mittels je eines Vertäurings an einem Gasgenerator festgelegt wird. Weiterhin ist eine Lenkradnabe mit verschiedenen Funktionselementen vorgesehen, die im aufgeblasenen Zustand von dem ringförmigen Airbag umschlossen wird.

Aus der gattungsgemäßen DE 197 49 914 A 1 ist ein Airbagmodul mit einem Gaskissen bekannt, dessen mittlerer vorderer Abschnitt an einer Fülleinrichtung befestigt ist, wodurch im aufgeblasenen Zustand eine Einbuchtung entsteht. Im Bereich der Einbuchtung ist eine Führung für das Gaskissen vorgesehen, auf deren dem Fahrzeuginnenraum zugewandten Ende ein Deckel mit einem Emblem aufgeclipst ist.

Die Erfindung hat es sich zur Aufgabe gestellt, eine leichte Herstellung eines Gassackmoduls mit einem ringförmigen Gassack sicherzustellen, insbesondere für eine gute Befestigung des Zentrumsabschnitts zu sorgen.

Dies wird hei einem Gassackmodul der eingangs genannten Art dadurch erreicht, daß das Emblem als separates Teil ausgebildet ist, wobei die Emblembefestigung zugleich zur Befestigung des Zentrumsabschnitts dient. Gemäß der Erfindung ist die Befestigung des Emblems so ausgebildet, daß sie einen Teil des Zentrumsabschnitts am Austritt aus dem Gassackmodul hindert.

Beim erfindungsgemäßen Gassackmodul hat das zusätzlich vorgesehene, stabile Emblem, genauer gesagt seine Befestigung eine weitere Funktion, indem es den Zentrumsabschnitt an einer ungehinderten Bewegung aus dem Modul heraus hindert, so daß keine separate Befestigung für den Zentrumsabschnitt mehr notwendig ist. Zudem muß das schwere Emblem beim erfindungsgemäßen Gassackmodul nicht nach außen schwenken, so daß zu seiner Befestigung kein hoher Aufwand getrieben werden muß, denn das Emblem ist am Halteabschnitt der Modulabdeckung vorgesehen, der nicht nach außen schwenkt. Damit ist aber auch die Befestigung der aufgeschwenkten Klappen am Rest der Modulabdeckung nicht mehr so stabil auszubilden, denn die Klappen weisen kein schweres Emblem mehr auf und sind, wie oben erwähnt, von geringer Dimension.

Der Bereich der Modulabdeckung, der einwärts der Austrittsöffnung liegt, d.h. von ihr umgeben wird, stellt einen Halteabschnitt dar, der vorzugsweise auch zur Befestigung des Zentrumsabschnitts dient, z.B. indem er wie eine Beilagscheibe am Gassack anliegt und der sicheren Klemmmung des Gassacks dient. Auch der Halteabschnitt hat somit eine Doppelfunktion inne, indem er einerseits der Rückhaltung des Zentrumsabschnitts und andererseits der Befestigung der Klappen an der Modulabdeckung dient.

Der Halteabschnitt ist vorzugsweise an einer Halterung im Gassackmodul, z.B. einem den Gasgenerator umgebenden Käfig befestigt, der wiederum am Gasgenerator, am Modulgehäuse oder z.B. an einem Gasgeneratorhalteblech befestigt ist, d.h. an einem sehr stabilen, möglichst unmittelbar mit dem Fahrzeug verbundenen Teil.

Die Einbuchtung mit dem Zentrumsabschnitt muß nicht unbedingt, auf die Vorderwand gesehen, eine kreisrunde Öffnung sein. Eine Ausführung sieht vor, daß im vollständig aufgeblasenen Zustand, in der Ansicht auf die Vorderwand, sich eine schlitzförmige Öffnung ergibt, also ein schlitzförmiger Bereich als Übergang vom Ringabschnitt der Vorderwand zur Einbuchtung ausgebildet ist. Das bedeutet, die Einbuchtung schließt sich ausgehend von der Befestigung im Bereich der Abdeckung zum Ringabschnitt zunehmend. Diese Geometrie im vollständig aufgeblasenen Zustand des Gassacks kann durch eine entsprechende Form der Gassackwand im Bereich der Einbuchtung (auch innere Gassackwand genannt) und einen entsprechenden Zuschnitt der angrenzenden, äußeren Gassackwand oder der Vorderwand erreicht werden. Darüber hinaus ist es auch möglich, daß die Einbuchtung im vollständig aufgeblasenen Zustand zur Vorderwand hin geschlossen wird, indem die Gassackwand, die die Einbuchtung begrenzt, radial einwärts drängt, bis gegenüberliegende Abschnitte der Gassackwand aneinander anliegen. In diesem Fall wird die Einbuchtung ausgehend von der Befestigung zum Ringabschnitt immer enger und wird schließlich geschlossen.

Problematisch kann gegebenenfalls die Herstellung des Gassacks im Bereich der tiefen Einbuchtung sein. Diese Einbuchtung könnte beispielsweise aus einem zu einem Rohr zusammengenähten Gewebestück bestehen, wobei hier aber dann das Problem der Befestigung dieses Gewebestücks am Rest der Vorderwand (Ringabschnitt) besteht. Eine Ausführungsform der Erfindung sieht eine einfache Herstellung des beim erfindungsgemäßen Gassackmodul vorgesehenen Gassacks vor, indem die Einbuchtung durch eine innere Gassackwand begrenzt ist, die aus wenigstens zwei Wandungsteilen besteht. Ein vorderseitiger, d.h. der Vorderseite näherer Wandungsteil hat einen ringförmigen Zuschnitt und ist mit seinem Innenrand mit dem Innenrand des Ringabschnitts der Vorderwand verbunden, wobei der Innenrand eine Öffnung zur Bildung des Zentrumsabschnitts begrenzt. Ein rückseitiger, d.h. der Rückwand näherer Wandungsteil ist mit dem Außenrand des vorderseitigen Wandungsteils verbunden, vorzugsweise mit seinem eigenen Außenrand. Die Befestigung, die den Zentrumsabschnitt am Umstülpen nach außen hindert, greift bei dieser Ausführungsform am rückseitigen Wandungsteil an. Bei dieser Ausgestaltung sieht der Gassack wie zwei ineinandergeschachtelte Gassäcke aus, bei denen der innere Gassack über die Öffnung am Ringabschnitt in den äußeren Gassack gesteckt wird. Diese Ausführungsform zeichnet sich einerseits durch eine einfache Fertigung, insbesondere ein einfaches Nähen der Wandungsteile aus. Andererseits hat sich überraschend ergeben, daß dieser Gassack bessere Rückhaltewerte bietet als ein Gassack, bei dem der Zentrumsabschnitt durch eine Röhre gebildet ist.

Zusammengefaßt gesagt wird beim erfindungsgemäßen Modul der Gassack im Bereich des Zentrumsabschnitts bleibend unmittelbar am Modul oder nahe am Modul, d.h. vorzugsweise dem Modulgehäuse, befestigt bleiben. Der Gassack ist dann von ringförmiger Gestalt und drängt über eine ringförmige Klappenanordnung nach außen.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Querschnittsansicht durch eine erste Ausführungsform des erfindungsgemäßen Gassackmoduls,
- Figur 2 eine Perspektivansicht von oben des erfindungsgemäßen Gassackmoduls nach Figur 1,
- Figur 3 eine vergrößerte Schnittansicht durch eine linke untere Hälfte des Gassackmoduls im Bereich des Gasgenerators,
- Figur 4 eine Querschnittsansicht durch ein Gassackmodul gemäß einer zweiten Ausführungsform, bei teilweise und vollständig entfaltetem Gassack,
- Figur 5 eine Draufsicht auf den in Figur 4 dargestellten, vollständig entfalteten Gassack,
- Figuren 6 und 7 zwei Varianten für die Ausbildung von eine Abdeckung bildenden Klappen,
- Figur 8 eine schematische Querschnittsansicht durch ein Gassackmodul gemäß einer weiteren Ausführungsform mit noch nicht vollständig aufgeblasenem Gassack,
- Figur 9 das Gassackmodul nach Figur 8 mit vollständig aufgeblasenem Gassack,
- Figur 10 eine Draufsicht auf die Vorderwand des vollständig aufgeblasenen Gassacks in Figur 9,
- Figur 11 eine perspektivische Ansicht der im Gassackmodul nach den Figuren 9 bis 11 verwendeten inneren Gassackwand,
- Figur 12 eine Seitenansicht eines Details des Gassackmoduls mit Modulabdeckung und Ummantelung des Gasgenerators mit einer speziellen Variante der Anbindung der Modulabdeckung an der Ummantelung und
- Figur 13 eine Querschnittsansicht durch die Abdeckung mit darin integrierter Befestigung, die bei einem Gassackmodul nach der Erfindung eingesetzt werden kann.

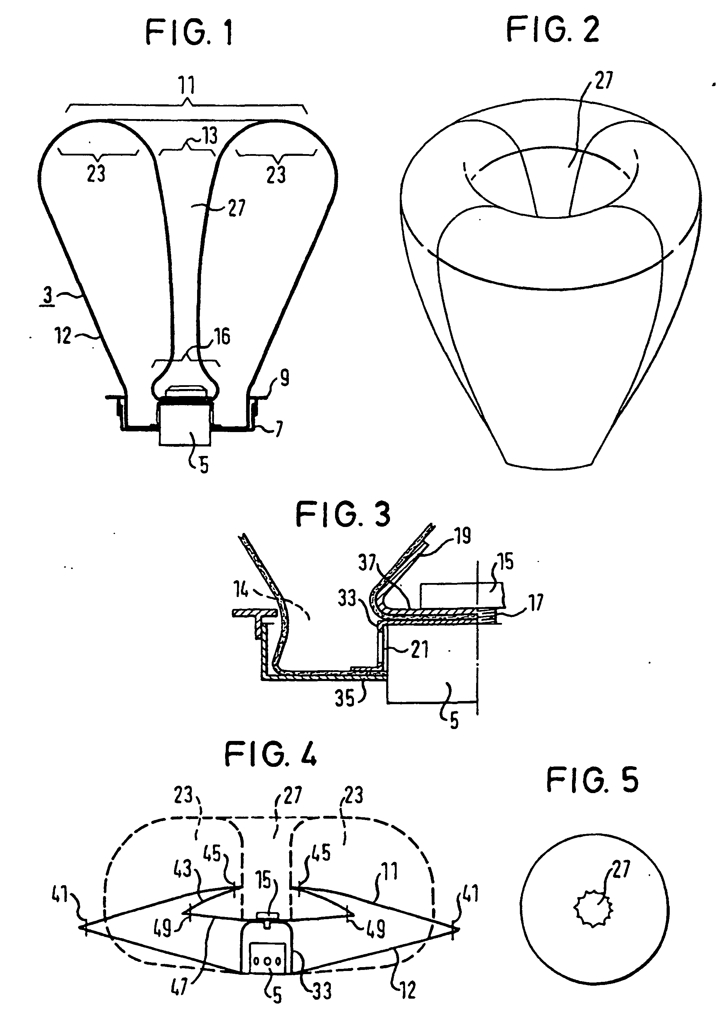

In Figur 1 ist ein im Fahrzeuglenkrad oder im Armaturenbrett auf Beifahrerseite untergebrachtes, zur Rückhaltung von Kopf und Oberkörper dienendes Gassackmodul gezeigt, das aus einem Gassack 3, einem Gasgenerator 5, einem Modulgehäuse 7, in dem Gassack 3 und Gasgenerator 5 untergebracht sind, und einer Modulabdeckung 9 besteht. Das Gassackmodul nach Figur 1 ist insbesondere ein im Lenkrad eines Fahrzeugs untergebrachtes Modul.

Der Gassack 3 besteht aus einer Gassackwand aus Gewebematerial, mit einer Vorderwand 11, die dem Insassen zugewandt ist, wenn der Gassack, wie in Figur 1 dargestellt ist, aufgeblasen ist, und die der Insasse kontaktiert. Ferner ist eine Rückwand 12 vorgesehen, die aus einem separaten Gewebeteil bestehen kann, das eine Einblasöffnung 21 aufweist, über die der Gasgenerator 5 in den Gassack 3 eingeführt wird. Die Vorderwand hat ferner einen sogenannten Zentrumsabschnitt 13, der durch eine tiefe Einbuchtung 27 definiert ist und dessen tiefster Bereich 16 an der Abdeckung 9 oder einer Ummantelung (Tilgertopf) 33 des Gasgenerators 5 unmittelbar und bleibend durch eine Befestigung arretiert ist. Die Befestigung ist ein Emblem 15 mit einer angeformten Schraube 17, das an der Abdeckung 9 oder der Halterung in Form der Ummantelung 33, die die Form eines Käfigs hat, außenseitig angeschraubt wird.

Die Abdeckung 9 hat ringförmig um den Zentrumsabschnitt herum aneinander angrenzende Öffnungsklappen 19, die nach oben geschwenkt werden, wenn sich der Gassack entfaltet (siehe Figur 3). Im geöffneten Zustand wird dann eine ringförmige, vorzugsweise kreisringförmige Austrittsöffnung 14 in der Abdeckung 9 freigegeben.

Die Befestigung in Form des Emblems sorgt für die Einbuchtung und hält den Zentrumsabschnitt, insbesondere den am nächsten zum Gasgenerator 5 liegenden Bereich 16 des Zentrumsabschnitts nahe am Gassackmodul. Ein Ringabschnitt 23, der den Zentrumsabschnitt 13 umgibt und den übrigen Teil der Vorderwand 11 bildet, hat einen größeren Abstand von der Abdeckung 9, so daß der Gassack eine weitaus größere Tiefe als im Bereich des Zentrumsabschnitts 13 hat, wobei bei der gezeigten Ausführungsform der Gassack in der Mitte überhaupt keine Tiefe aufweist, denn er bleibt in dem unmittelbar unter dem Emblem 15 liegenden Teil des Zentrumsabschnitts 13 in seiner ursprünglichen Lage, die er auch in gefaltetem Zustand einnahm und bewegt sich in diesem Bereich überhaupt nicht in Richtung zum Insassen.

Einwärts des Ringabschnitts 23 ergibt sich im Zentrum der Vorderwand die Einbuchtung 27, die, wie Versuche ergeben haben, die Rückhaltewirkung positiv beeinflußt. Dadurch, daß der Zentrumsabschnitt 13 des Gassacks an einem Austritt aus dem Modul gehindert wird, kann nur der Ringabschnitt 23 zum Öffnen der Klappen 19 beitragen, wobei die erzeugte Kraft beim Aufblasen vor allem radial nach außen gerichtet ist, so daß sich der Gassack zu Beginn seines Entfaltungsvorgangs hauptsächlich radial entfaltet und die Bewegung in Insassenrichtung gering ist. Im mittigen Bereich des Zentrumsabschnitts ist überhaupt keine Bewegung in Richtung des Insassen möglich, so daß die Beanspruchung des Insassen durch den Gassack 3 reduziert wird. Bei bisherigen Gassäcken ist der schnell nach außen sich bewegende Zentrumsabschnitt derjenige Teil der Gassackwand, der die größte Belastung für den Insassen darstellt, wenn der Insasse und die Gassackwand aufeinandertreffen.

Figur 3 zeigt die Klemmung des Gassacks 3 im Bereich der Einblasöffnung 21. Der Gassack wird durch die topfförmige Ummantelung 33 des Gasgenerators am Flansch 35 des Gasgenerators 5 geklemmt. Mit 37 ist der sogenannte Halteabschnitt der Abdeckung 9 bezeichnet, welcher einwärts der ringförmigen Austrittsöffnung 14 liegt und der zusammen mit dem Emblem 15 die Befestigung des Zentrumsabschnitts 13 bildet. Die Öffnungsklappen 19 sind bei der dargestellten Ausführungsform am Innenumfang der ringförmigen Austrittsöffnung 14 gebildet.

Bei der in Figur 4 dargestellten Ausführungsform ist die käfigförmige Halterung 33, die den Gasgenerator 5 umgibt, sowie die Befestigung des Zentrumsabschnitts 13 über das Emblem 15 an der Ummantelung 33 erneut zu sehen. Die Vorderwand 11 besteht aus einem ringförmigen Gewebeabschnitt, der an seinem Außenrand mit der Rückwand 12 über eine Naht 41 verbunden ist. Am Innenrand des Ringabschnitts 23, der die Öffnung in dem Ringabschnitt 23 begrenzt und den Zentrumsabschnitt 13 mit definiert, ist der Ringabschnitt mit dem Innenrand eines vorderseitigen, einen ringförmigen Zuschnitt aufweisenden Wandungsteils 43 vernäht. Eine entsprechende Umfangsnaht ist mit 45 bezeichnet. An den vorderseitigen Wandungsteil 43 schließt sich ein rückseitiger Wandungsteil 47 an, der an seinem Außenrand über eine Umfangsnaht 49 mit dem Außenrand des vorderseitigen Wandungsteils 43 verbunden ist. Der rückseitige Wandungsteil 47 ist der Bereich, der auch im Bereich seines Zentrums an der Ummantelung 33 befestigt ist. Die Wandungsteile 43, 47 bilden eine innere Gassackwand. Im vollständig entfalteten Zustand, der mit unterbrochenen Linien dargestellt ist, ist die abrupte, tiefe Einbuchtung 27 gut zu erkennen, welche vom vorderseitigen und rückseitigen Wandungsteil 43, 47 begrenzt wird.

Durch den Zuschnitt als Kreis (Wandungsteil 47) bzw. Ring (Wandungsteil 43) ergeben sich im vollständig aufgeblasenen Zustand im Bereich der Einbuchtung 27 Falten, die durch die Zick-Zack-Linie, die die Einbuchtung 27 begrenzt, in Figur 5 symbolisiert ist. Voraussichtlich ist diese unregelmäßige Faltung aber von Vorteil, was die Rückhaltewirkung anbelangt, denn der so ausgebildete Gassack erzielt bessere Rückhaltewirkungen als ein Gassack, bei dem die Einbuchtung 27 durch einen aus Gewebematerial erzeugten Zylinder gebildet ist, der keine Falten im aufgeblasenen Zustand aufweist, da die Falten den Querschnitt verengen und die Stabilität des aufgeblasenen Luftsacks erhöhen.

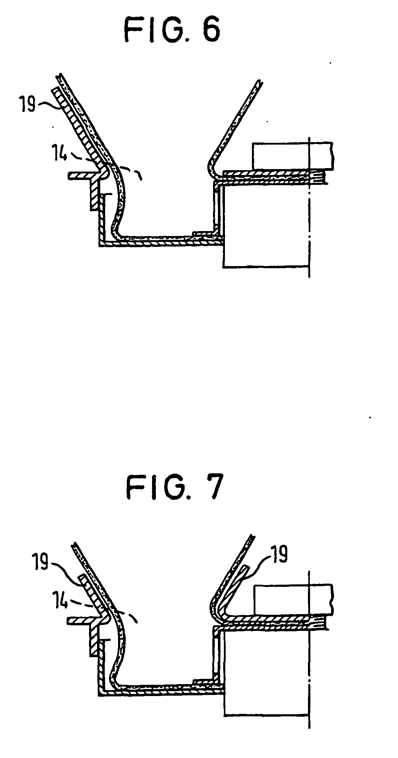

In den Figuren 6 und 7 sind zwei Varianten für die Ausbildung der Öffnungsklappen 19 dargestellt. Gemäß Figur 6 sind sämtliche Klappen 19 am Außenumfang der Austrittsöffnung 14 gebildet. Bei der in Figur 7 gezeigten Variante sind einander zugeordnete Klappen 19 am Innen- und Außenumfang der Austrittsöffnung 14 vorgesehen. Die einander gegenüberliegenden Klappen 19 decken jeweils etwa die Hälfte der radialen Ausdehnung der ringförmigen Austrittsöffnung ab. Diese Variante hat den Vorteil, daß die Klappen 19 im Vergleich zu den in den Figuren 3 und 6 gezeigten Klappen eine kürzere Baulänge haben. Somit hat jede einzelne Klappe beim Öffnen eine vergleichsweise geringe kinetische Energie und ragt zudem nicht so weit in den Fahrgastraum, so daß die Verletzungsgefahr des Fahrzeuginsassen durch die Klappen 19 bei einem möglichen Sekundäraufprall verringert ist.

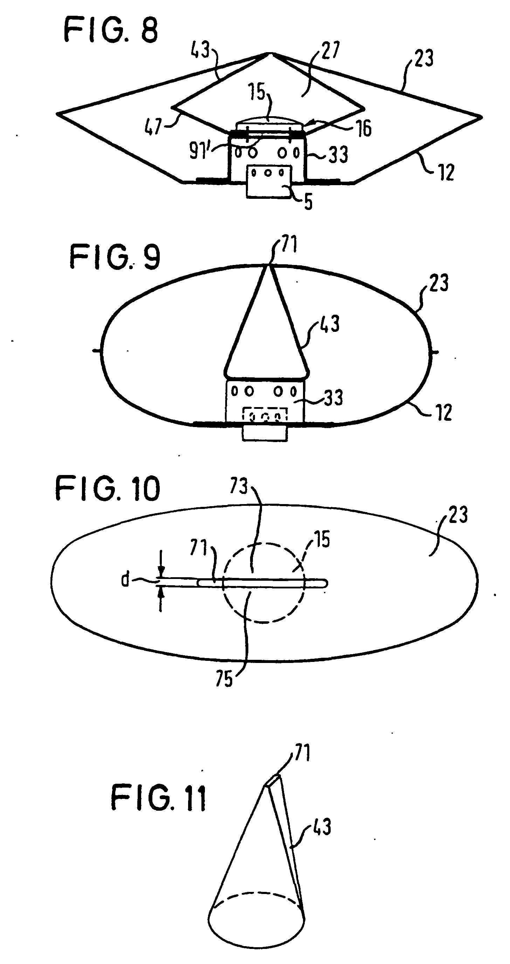

Bei der Ausführungsform nach Figur 8 ist zu erkennen, daß die Einbuchtung 27 vom tiefsten Bereich 16, also dem Teil der Vorderwand, der das Gassackmodul beim Aufblasen nicht verläßt, zum Ringabschnitt 23 zuläuft und vollständig oder fast vollständig geschlossen wird, so daß von außen keine oder nur eine geringe Öffnung zu erkennen ist, die den Übergang des Ringabschnitts zum Zentrumsabschnitt 13 und damit zur Einbuchtung 27 bildet.

In Figur 9 ist der vollständig entfaltete Gassack gezeigt, der zum Fahrzeuginsassen eine fast geschlossene Gestalt hat.

In Figur 10 ist zu erkennen, daß der Ringabschnitt 23 sich um einen Schlitz 71 herum erstreckt, der eine geringe Dicke d aufweist. Der Ringabschnitt 23 hat eine ellipsenförmige Gestalt, die dadurch gebildet wird, daß der Ringabschnitt 23 im Zuschnitt bereits ellipsenförmig ist und einen Bereich mit dem Schlitz 71 aufweist. Der Schlitz 71 muß so groß sein, daß er beim Aufreißen der Abdeckung am Emblem 15 und dem Teil der Abdeckung, der unmittelbar unterhalb des Emblems 15 liegt, entlanggleiten kann und sich aus dem Gassackmodul herausbewegen kann.

Der Zuschnitt der Gassackwand und der einzelnen Wandungsteile kann auch so gewählt sein, daß bei vollständig aufgeblasenem Gassack der Schlitz 71 geschlossen ist, das heißt, daß gegenüberliegende Abschnitte 73, 75 aufeinander zu liegen kommen und die Einbuchtung zum Ringabschnitt schließen. Die Dicke d ist damit 0.

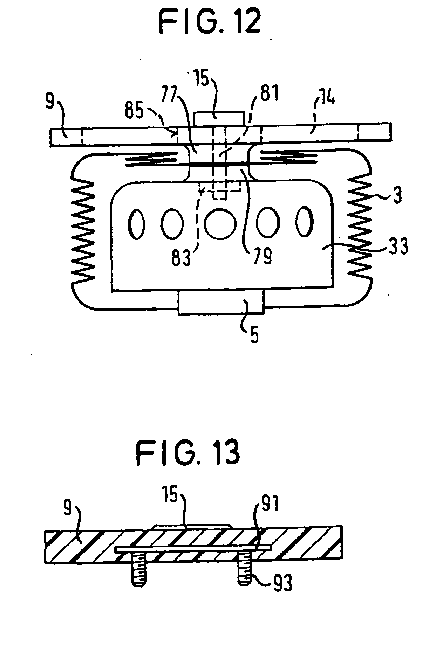

In Figur 11 ist die entsprechend Figur 4 aus zwei Wandungsteilen 43, 47 bestehende innere Gassackwand bei vollständig aufgeblasenem Gassack zu erkennen, wobei auch der Schlitz 71 zu sehen ist, welcher den Übergang von Ringabschnitt 23 zu Zentrumsabschnitt 13 bildet.

Der Zusammenbau des Gassackmoduls muß so erfolgen, daß einerseits der an der Abdeckung 9 gehaltene Teil des Zentrumsabschnitts 13 auch tatsächlich am Austritt aus dem Gassackmodul gehindert wird. Andererseits muß erreicht werden, daß der gesamte angrenzende Teil der Gassackwand aus dem Gassackmodul und aus der Abdeckung heraustreten kann. Es muß deshalb verhindert werden, daß außer dem mittigen Teil des Zentrumsabschnitts noch andere Teile der Gassackwand durch die Befestigung des zurückgehaltenen Teils des Zentrumsabschnitts geklemmt wird.

In Figur 12 ist zu erkennen, daß die Abdeckung 9 auf ihrer Innenseite einen innenseitig vorstehenden, angeformten Vorsprung 77 in Form eines Zylinders aufweist, der den gleichen Außendurchmesser wie eine an der oberen Stirnwand der Ummantelung 33 gebildete Ausbuchtung 79 hat. Vorsprung 77 und Ausbuchtung 79 liegen aneinander an und klemmen zwischen sich den Teil des Zentrumsabschnitts des Gassacks, der am Austritt aus dem Gassackmodul gehindert wird. Zu erkennen ist symbolisch eine am Emblem 15 angeformte Schraube 81, die durch den Schlitz 71 hindurchragt und auf der Innenseite der Ummantelung 33 mit einer Mutter 83 fixiert ist. Der Bereich der Gassackwand, der den Rand des Schlitzes 71 bildet, verläuft um das Emblem 15 und um den Vorsprung 77 herum. Er kann auch radial außerhalb des Innenrandes 85 der Austrittsöffnung 14 liegen, wobei dies auch durch einen entsprechend großen Vorsprung 77 erreichbar ist. Eine andere Möglichkeit besteht darin, daß zum Beispiel der Vorsprung 77 im unteren Bereich die Form des späteren Schlitzes 71 hat und sich zum Emblem 15 nach außen erweitert, so daß sich der Gassack im Bereich des Schlitzes 71, wie ein Knopfloch beim Austritt aus dem Modul aufweitet und anschließend, nach dem Austritt, wieder zum Schlitz 71 verengt.

In Figur 13 ist ein in die Abdeckung 9 eingebettetes Gassackhalteblech 91 mit zwei angeformten Gewindezapfen 93 dargestellt, die die Befestigung für den Zentrumsabschnitt 13 bilden, indem die Gewindezapfen 93, ähnlich wie in Figur 12, durch die Stirnwand der Ummantelung 33 ragen.

Noch eine andere Ausführungsform sieht vor, daß das Emblem 15 als separates Teil ausgebildet ist und mit einem außerhalb der Abdeckung 9 vorgesehenen Gassackhalteblech 91' gemäß Figur 8 verbunden ist oder einstückig in dieses übergeht.

Zur Bestückung des Gassackmoduls mit dem Gassack sind zwei Verfahren angedacht. Das erste Verfahren sieht vor, daß die Abdeckung 9 als topfförmige Kappe ausgebildet ist, in die der Gassack hineingefaltet wird, wobei bei dieser Faltung beachtet werden muß, daß, geht man von Figur 12 aus, nur der zurückzuhaltende Teil der Gassackwand an der Stirnwand des Vorsprungs 77 anliegen darf. Der restliche Teil des Zentrumsabschnitts liegt dann an der Mantelfläche des Vorsprungs 19 an. Beim Einlegen des Gassacks dient ein sogenannter Dummy als Ersatz für die Ummantelung 33. Nach dem Einlegen des Gassacks wird der Dummy durch die Ummantelung 33 ersetzt, und die Mutter 83 wird aufgeschraubt. Eine weitere Ausführungsform sieht vor, daß das Gassackmodul aus zwei topfförmigen Teilen, einer die Abdeckung 9 bildenden topfförmigen Kappe und einem topfförmigen Aufnahmeteil besteht. In das Aufnahmeteil wird die Ummantelung 33 gelegt, so daß sich zwischen der Umfangswand des Aufnahmeteils und der Ummantelung 33 ein Ringraum bildet, in den von oben der Gassack hineingefaltet wird. Nach dem Einlegen des Gassacks wird von oben die Abdeckung 9 aufgesetzt und beispielsweise von unten verschraubt.

## Patentansprüche

1. Gassackmodul, mit
einem Gassack (3) mit einer Gassackwand, die eine dem zurückzuhaltenden Insassen zugewandte Vorderwand (11) mit einem Zentrumsabschnitt (13) und eine Rückwand (12) mit einer Einblasöffnung (21) zum Anschluß eines Gasgenerators (5) aufweist,
einer Befestigung (15), die den Zentrumsabschnitt (13) im vollständig aufgeblasenen Zustand des Gassacks (3) am Modul befestigt hält und ihn beim Entfalten an einer freien Bewegung nach außen hindert, so daß der Zentrumsabschnitt (13) eine Einbuchtung (27) bildet,
und einer Modulabdeckung (9), die im Rückhaltefall zum Austritt des Gassacks (3) geöffnet wird, wobei die Modulabdeckung (9) eine ringförmige, vorgegebene Austrittsöffnung (14), die die Befestigung umgibt, und einen von der Austrittsöffnung (14) umschlossenen Halteabschnitt (37) aufweist und an den Halteabschnitt (37) ein von außen sichtbares, am Modul befestigtes Emblem (15) angrenzt,
**dadurch gekennzeichnet,**
**daß** das Emblem als separates Teil ausgebildet ist und
**daß** die Emblembefestigung zugleich der Befestigung des Zentrumsabschnitts (13) dient.

2. Gassackmodul nach Anspruch 1, **dadurch gekennzeichnet, daß** auch der Halteabschnitt (37) der Befestigung des Zentrumsabschnitts (13) dient.

3. Gassackmodul nach Anspruch 2, **dadurch gekennzeichnet, daß** der Halteabschnitt (37) an einer Halterung, vorzugsweise in Form einer den Gasgenerator umgebenden käfigartigen Ummantelung (33), im Gassackmodul befestigt ist.

4. Gassackmodul nach Anspruch 3, **dadurch gekennzeichnet, daß** die Halterung rückseitig am Gasgenerator (5) oder am Modulgehäuse (7) befestigt ist.

5. Gassackmodul nach einem der vorhergehenden Ansprüche, **dadurch gekennzeichnet, daß** die ringförmige Austrittsöffnung (14) durch aneinander angrenzende Klappen (19) verschlossen ist, die einstückig an der Modulabdeckung (9) angeformt sind.

6. Gassackmodul nach Anspruch 5, **dadurch gekennzeichnet, daß** einander gegenüberliegende Klappen (19) am Innenumfang und/oder am Außenumfang der ringförmigen Austrittsöffnung (14) gebildet sind.

7. Gassackmodul nach einem der vorhergehenden Ansprüche, **dadurch gekennzeichnet, daß** die Befestigung des Zentrumsabschnitts (13) so ausgebildet ist, daß sie einen Teil des Zentrumsabschnitts (13) des Gassacks (3) am Austritt aus dem Gassackmodul hindert.

8. Gassackmodul nach Anspruch 7, **dadurch gekennzeichnet, daß** die Befestigung ein außerhalb des Gassacks (3) vorgesehenes Gassackhalteblech (91; 91') aufweist.

9. Gassackmodul nach Anspruch 8, **dadurch gekennzeichnet, daß** das Gassackhalteblech (91) in die Abdeckung (9) eingebettet ist.

10. Gassackmodul nach Anspruch 8 oder 9, **dadurch gekennzeichnet, daß** das als separates Teil ausgebildete Emblem (15) mit dem Gassackhalteblech (91; 91') verbunden ist.

11. Gassackmodul nach einem der vorhergehenden Ansprüche, **dadurch gekennzeichnet, daß** der Ringabschnitt der Vorderwand (11) einen ellipsenförmigen Außenrand aufweist.

12. Gassackmodul nach einem der vorhergehenden Ansprüche, **dadurch gekennzeichnet, daß** die Einbuchtung (27) im vollständig aufgeblasenen Zustand durch aneinanderliegende gegenüberliegende Abschnitte (83, 85) der Gassackwand zum Ringabschnitt (23) der Vorderwand hin geschlossen ist.

13. Gassackmodul nach einem der vorhergehenden Ansprüche, **dadurch gekennzeichnet, daß** die Einbuchtung (27) durch eine innere Gassackwand begrenzt ist, die aus wenigstens zwei Wandungsteilen besteht, wobei ein vorderseitiger Wandungsteil (43) einen ringförmigen Zuschnitt hat und mit seinem Innenrand mit dem Innenrand des Ringabschnitts der Vorderwand (11) verbunden ist, wobei die Innenränder eine Öffnung zur Bildung des Zentrumsabschnitts (13) begrenzt, wobei ein rückseitiger Wandungsteil (47) mit dem Außenrand des vorderseitigen Wandungsteils (43) verbunden ist und wobei die Befestigung des Zentrumsabschnitts (13) am rückseitigen Wandungsteil (47) angreift.

14. Gassackmodul nach einem der vorhergehenden Ansprüche, **dadurch gekennzeichnet, daß** das Emblem auch den Halteabschnitt (37) befestigt.

## Claims

1. A gas bag module, comprising
a gas bag (3) including a gas bag wall having a front wall (11) which faces the occupant to be restrained and has a center section (13), and a rear wall (12) having an inflation opening (21) for connecting a gas generator (5),
a fastener (15) which holds the center section (13) fastened to the module in the fully inflated state of the gas bag (3) and prevents it from freely moving outwards during deployment, so that the center section (13) forms an indentation (27),
and a module covering (9) which is opened in a case of restraint for the gas bag (3) to exit, the module covering (9) having an annular, predefined exit opening (14) which surrounds the fastener, and a retaining section (37) enclosed by the exit opening (14), and the retaining section (37) being adjoined by an emblem (15) which is visible from outside and fastened to the module,
**characterized in that**
the emblem is configured as a separate part, and
the emblem fastener at the same time serves to fasten the center section (13).

2. The gas bag module according to Claim 1, **characterized in that** the retaining section (37) also serves to fasten the center section (13).

3. The gas bag module according to Claim 2, **characterized in that** the retaining section (37) is fastened to a mounting in the gas bag module, the mounting preferably being in the form of a cage-like casing (33) surrounding the gas generator.

4. The gas bag module according to Claim 3, **characterized in that** the mounting is fastened to the rear side of the gas generator (5) or the module housing (7).

5. The gas bag module according to any of the preceding claims, **characterized in that** the annular exit opening (14) is closed by flaps (19) adjoining each other, which are formed integrally with the module covering (9).

6. The gas bag module according to Claim 5, **characterized in that** flaps (19) located opposite each other are formed on the inner periphery and/or on the outer periphery of the annular exit opening (14).

7. The gas bag module according to any of the preceding claims, **characterized in that** the fastener of the center section (13) is designed such that it prevents part of the center section (13) of the gas bag (3) from exiting the gas bag module.

8. The gas bag module according to Claim 7, **characterized in that** the fastener includes a gas bag holding plate (91; 91') provided outside the gas bag (3).

9. The gas bag module according to Claim 8, **characterized in that** the gas bag holding plate (91) is embedded in the covering (9).

10. The gas bag module according to Claim 8 or 9, **characterized in that** the emblem (15), configured as a separate part, is connected with the gas bag holding plate (91; 91').

11. The gas bag module according to any of the preceding claims, **characterized in that** the ring section of the front wall (11) has an elliptical outer edge.

12. The gas bag module according to any of the preceding claims, **characterized in that** in the fully inflated state, the indentation (27) is closed towards the ring section (23) of the front wall by opposite sections (83, 85) of the gas bag wall adjoining each other.

13. The gas bag module according to any of the preceding claims, **characterized in that** the indentation (27) is delimited by an inner gas bag wall which consists of at least two wall parts, a forward wall part (43) being cut so as to have an annular shape and having an inner edge that is connected with the inner edge of the ring section of the front wall (11), the inner edges delimiting an opening to form the center section (13), a rearward wall part (47) being connected with the outer edge of the forward wall part (43), and the fastener of the center section (13) engaging the rearward wall part (47).

14. The gas bag module according to any of the preceding claims, **characterized in that** the emblem also serves to fasten the retaining section (37).

## Revendications

1. Module de coussin à gaz, comportant
un coussin à gaz (3) avec une paroi de coussin à gaz qui présente une paroi antérieure (11) tournée vers les passagers à retenir et possédant un tronçon central (13), et une paroi postérieure (12) avec un orifice de soufflage (21) destiné au raccordement d'un générateur de gaz (5),
une fixation (15) qui retient le tronçon central (13) fixé sur le module à l'état totalement gonflé du coussin à gaz (3) et qui l'empêche de se mouvoir librement vers l'extérieur lors du déploiement, de sorte que le tronçon central (13) forme un creux (27), et
un couvercle de module (9) qui, en cas de retenue, est ouvert pour faire sortir le coussin à gaz (3), le couvercle de module (9) présentant une ouverture de sortie (14) prédéterminée de forme annulaire, qui entoure la fixation, et un tronçon de retenue (37) entouré par l'ouverture de sortie (14), et le tronçon de retenue (37) étant adjacent à un emblème (15) visible de l'extérieur et fixé sur le module,
**caractérisé en ce que**
l'emblème est réalisé sous forme de partie séparée et
**en ce que** la fixation de l'emblème sert en même temps à la fixation du tronçon central (13).

2. Module de coussin à gaz selon la revendication 1, **caractérisé en ce que** le tronçon de retenue (37) sert aussi à la fixation du tronçon central (13).

3. Module de coussin à gaz selon la revendication 2, **caractérisé en ce que** le tronçon de retenue (37) est fixé dans le module de coussin à gaz sur une monture, de préférence sous la forme d'une enveloppe (33) en forme de cage entourant le générateur de gaz.

4. Module de coussin à gaz selon la revendication 3, **caractérisé en ce que** la monture est fixée sur la face postérieure du générateur de gaz (5) ou sur le boîtier de module (7).

5. Module de coussin à gaz selon l'une des revendications précédentes, **caractérisé en ce que** l'ouverture de sortie (14) de forme annulaire est fermée par des volets (19) adjacents l'un à l'autre qui sont conformés d'un seul tenant sur le couvercle de module (9).

6. Module de coussin à gaz selon la revendication 5, **caractérisé en ce que** des volets (19) opposés l'un à l'autre sont formés sur la périphérie intérieure et/ou sur la périphérie extérieure de l'ouverture de sortie (14) de forme annulaire.

7. Module de coussin à gaz selon l'une des revendications précédentes, **caractérisé en ce que** la fixation du tronçon central (13) est réalisée de telle sorte qu'elle empêche une partie du tronçon central (13) du coussin à gaz (3) de sortir du module de coussin à gaz.

8. Module de coussin à gaz selon la revendication 7, **caractérisé en ce que** la fixation présente une tôle de retenue (91 ; 91') du coussin à gaz prévue en dehors du coussin à gaz (3).

9. Module de coussin à gaz selon la revendication 8, **caractérisé en ce que** la tôle de retenue (91 ; 91') du coussin à gaz est noyée dans le couvercle (9).

10. Module de coussin à gaz selon la revendication 8 ou 9, **caractérisé en ce que** l'emblème (15) réalisé sous forme de partie séparée est relié à la tôle de retenue (91 ; 91') du coussin à gaz.

11. Module de coussin à gaz selon l'une des revendications précédentes, **caractérisé en ce que** le tronçon annulaire de la paroi antérieure (11) présente un bord extérieur en forme d'ellipse.

12. Module de coussin à gaz selon l'une des revendications précédentes, **caractérisé en ce qu'**à l'état totalement gonflé, le creux (27) est fermé vers le tronçon annulaire (23) de la paroi antérieure par des tronçons (83, 85) de la paroi du coussin à gaz, qui sont opposés l'un à l'autre et adjacents l'un à l'autre.

13. Module de coussin à gaz selon l'une des revendications précédentes, **caractérisé en ce que** le creux (27) est délimité par une paroi de coussin à gaz intérieure qui est constituée par au moins deux parties de paroi, une partie de paroi antérieure (43) ayant une découpe annulaire et étant reliée avec son bord intérieur au bord intérieur du tronçon annulaire de la paroi antérieure (11), les bords intérieurs délimitant une ouverture pour former le tronçon central (13), une partie de paroi postérieure (47) étant reliée au bord extérieur de la partie de paroi antérieure (43), et la fixation du tronçon central (13) s'engageant sur la partie de paroi postérieure (47).

14. Module de coussin à gaz selon l'une des revendications précédentes, **caractérisé en ce que** l'emblème sert aussi à fixer le tronçon de retenue (37).
